# EUROPEAN PATENT APPLICATION

(11) **EP 2 116 964 A1**
(43) Date of publication of application: **11.11.2009**
(21) Application number: 07859985.9
(22) Date of filing: 21.12.2007
(51) Int. Cl.: G06Q 10/00

(54) **METHOD AND PROGRAM FOR SUPPORTING DATA INPUT FOR BUSINESS PROCESSING**

(30) Priority: 28.12.2006 JP 2006353887
(71) Applicant: International Business Machines Corporation, Armonk, New York 10504 (US)
(72) Inventor: ADACHI, Hisatoshi, Yamato-shi Kanagawa 242-8502 (JP); WAKAO, Masaki, Yamato-shi Kanagawa 242-8502 (JP); NOGUCHI, Masato, Yamato-shi Kanagawa 242-8502 (JP)
(74) Representative: Ling, Christopher John
(86) International application number: PCT/JP2007/074755
(87) International publication number: WO 2008/084665

(57) **Abstract**

A method for supporting input of data necessary for performing business processing in a data processing system including an input user terminal and a delegate input user terminal is provided. The input user terminal records a terminal operation of an input user, and receives from the input user a designation of a delegate input user for at least one of the input fields in an input screen of the data necessary for the business processing. The delegate input user terminal starts reproduction processing of the operation at the input user terminal by using an input reproduction file created based on the recording of the terminal operation of the input user, and thereafter, stops the reproduction processing and prompts the delegate input user to input data to be inputted to the input field assigned to the delegate input user. The delegate input user terminal transmits the inputted data from the delegate input user.

## Description

### Field of the invention

The present invention relates generally to an information processing technology, and more particularly to a method and program product for supporting input of data for business processing.

### Background of the Invention

Recent enterprise systems generally have web application systems installed. For example, in a reimbursement processing system as one of such web application systems, an employee inputs a route, traveling expenses, lodging expenses, accounting code and others into input fields in the input screen displayed on a web browser. The inputted data is transmitted to a reimbursement processing application server for execution of the reimbursement processing.

If an employee of the company having such an enterprise system does not exactly know or forgot part of the input items (for example, the accounting code) necessary for the reimbursement processing, he/she uses a collaboration tool such as an electronic mail or instant messaging software to confirm it with another employee so as to accomplish the reimbursement processing.

However, such confirmation jobs associated with data inputs by the employees may lead to a considerable cost for the company as a whole. It will be appreciated from the foregoing that there is a need for an information system that does not require such plain and troublesome confirmation jobs as described above.

Japanese Unexamined Patent Publication (Kokai) No. 2005-321937 discloses a part information management system aiming at enhancing efficiency in input of part information. In the system, a part code management server receives an input request of part information for a new part and, in accordance with an instruction of a manager, transmits an electronic mail requesting input of part information to a vendor corresponding to the part that is an input object. Each vendor, in receipt of the electronic mail, accesses a mediation server from the vendor terminal. The mediation server provides the accessed vendor with a corresponding part information input screen. Each vendor performs input of the part information of the requested part from the part information input screen. The inputted part information is managed by the mediation server, and is registered in the part code management server after being confirmed by the manager.

Japanese Unexamined Patent Publication (Kokai) No. 2002-279166 discloses a system allowing a user to readily obtain his/her desired household account book data without the need to access a data providing mechanism related to the user him/herself. In the system, a service request from a user terminal regarding the household account book data is received at a service agent server. In the service agent server, requested data desired by the user is inquired to the data providing mechanism, to collect the requested data from the data providing mechanism with the inquiry. The collected data is edited to household account book data desired by the user, which is then delivered to the user terminal. After the collection of the data desired by the user is finished, the completion of the service is informed from the user terminal to the service agent server, and the edited household account book data is erased.

[Patent Document 1]
   Japanese Unexamined Patent Publication (Kokai) No. 2005-321937
[Patent Document 2]
   Japanese Unexamined Patent Publication (Kokai) No. 2002-279166

### Summary of the Invention

In order to delegate input of part of data to be inputted to an existing web application to another person according to the background technologies, it might be necessary to prepare a workflow process template in advance, or to revise the existing web application, leading to lack of flexibility in the system configuration. As such, with the background technologies, it is not possible to generally allow delegation of input for an existing web application.

In view of the foregoing, an object of the present invention is to provide improvement in a method and program product for supporting input of data for business processing in an application server.

In order to achieve the above-described object, the present invention provides a method for supporting input of data necessary for performing business processing in a data processing system including an input user terminal and a delegate input user terminal. The data processing system is preferably connected to an application server performing the business processing.

The method includes the steps, performed in the input user terminal, of: starting recording of a terminal operation of an input user; displaying an input screen of data necessary for the business processing, the input screen including one or more input fields and an interface for designating a delegate input user for at least one of the one or more input fields; and receiving from the input user a designation of the delegate input user for at least one of the one or more input fields.

The method further includes the steps, performed in the delegate input user terminal, of: starting reproduction processing of an operation at the input user terminal by using an input reproduction file created based on the recording of the terminal operation of the input user; stopping the reproduction processing and prompting the delegate input user to input data to be inputted to the input field assigned to the delegate input user; receiving the input of the data from the delegate input user to the input field for which the delegate input user is designated; and transmitting the inputted data from the delegate input user.

While the present invention has been outlined above as a method, the present invention may also be understood as a data processing system, a program, or a program product. The program product may include a storage medium having the program stored therein, for example, or may include a medium for transmitting the program.

It should be noted that the above summary of the invention does not list all the features necessary for the present invention; rather, any combination or subcombination of the elements may also constitute the invention.

### Brief Description of the drawings

Fig. 1 is a high-level, overall schematic diagram of a data processing system according to an embodiment of the present invention;
Fig. 2 is a functional block diagram of an agent server according to the embodiment of the present invention;
Fig. 3 is a functional block diagram of a client according to the embodiment of the present invention;
Fig. 4 is a first flowchart illustrating an operation of an input user terminal in the data processing system of the embodiment of the present invention;
Fig. 5 is a second flowchart illustrating the operation of the input user terminal in the data processing system of the embodiment of the present invention;
Fig. 6 is a flowchart illustrating an operation for preparation of delegate input task processing in the embodiment of the present invention;
Fig. 7 is a flowchart illustrating an operation of the delegate input task processing in the embodiment of the present invention;
Fig. 8 is a flowchart illustrating an operation of delegate processing in the embodiment of the present invention;
Fig. 9 shows an example of a hardware configuration of an information processing apparatus suitable for implementing the client and the servers according to the embodiment of the present invention;
Fig. 10 illustrates a model structure recorded on an input user terminal in the data processing system of the embodiment of the present invention;
Fig. 11 illustrates a segmented task structure in the data processing system of the embodiment of the present invention;
Fig. 12 illustrates a workflow process in the data processing system of the embodiment of the present invention;
Fig. 13 is an example of an interface including a selection list for designating a delegate input user according to the embodiment of the present invention;
Fig. 14 is an example of an input screen on which marking of a designated delegate input user is made in the embodiment of the present invention;
Fig. 15 is an example of an interface for inputting selection of either "GO TO NEXT SCREEN" or "EXECUTION RESERVATION" in the embodiment of the present invention; and
Fig. 16 is an example of an input screen on which only the input field to be inputted by a delegate is made to accept the input in the embodiment of the present invention.

### Detailed Description of the Invention

While a best mode for carrying out the present invention will now be described in detail with reference to the drawings, the following embodiment is not to restrict the invention recited in the claims for patent. Further, all the combinations of the features discussed in the embodiment are not necessarily indispensable for the solving means of the invention.

Furthermore, the present invention can be implemented in many different manners, and should not be understood only from the contents described in the embodiment. Throughout the description of the embodiment, the same elements are denoted by the same reference characters.

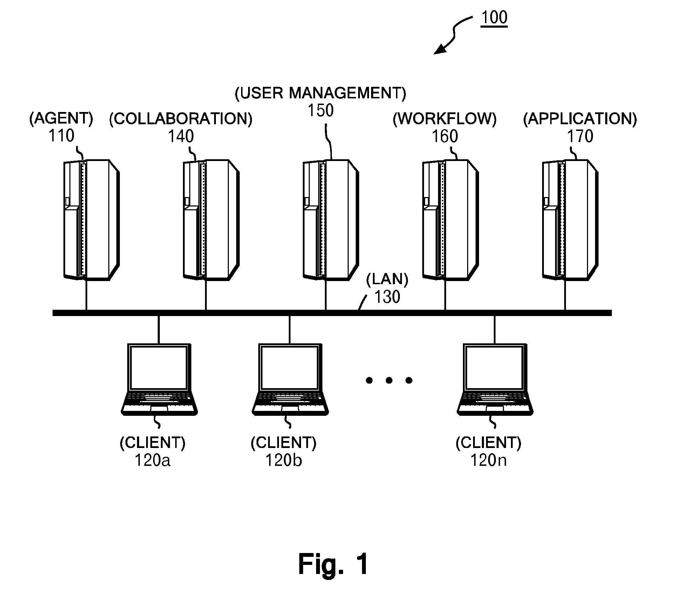

Fig. 1 is a high-level, overall schematic diagram of an in-house network system 100 according to an embodiment of the present invention. The system 100 of the embodiment of the present invention includes an agent server 110, clients 120a, 120b, ..., 120n (herein, collectively referred to as the "client(s) 120"), a collaboration server 140, a user management server 150, a workflow server 160, and an application server 170, which are connected to each other via a network 130.

The agent server 110 receives a designation of a delegate input user for at least one input field included in an input screen for inputting data necessary for the application server 170 from an input user terminal 120a, generates, in response thereto, an instruction to generate a workflow process including a delegate input task to be performed by the delegate input user, and transmits the instruction to the workflow server 160 to make it generate the workflow process. Further, the agent server 110 provides the delegate input user with an interface for performing the delegate input task. Furthermore, the agent server 110 uses the data inputted by the delegate through the delegate input user terminal, to carry out processing on behalf of the application server (hereinafter, referred to as "delegate processing"). The functions and operations of the agent server 110 will be described later in detail.

The client 120 of the embodiment of the present invention is a personal computer provided for a respective user. The client 120 is provided with a well-known web browser, which allows the user to operate the client 120 to interact with another computer connected to the network 130 via the browser. In the embodiment of the present invention, a plug-in for the browser is downloaded and installed from the agent server 110 to the client 120 to add an advanced function. The advanced function added by the plug-in will be described later in detail.

In the embodiment of the present invention, the client 120 may use Internet Explorer (trademark) provided by Microsoft Corporation, Firefox (trademark) provided by Mozilla Corporation or the like as the browser. Herein, the client 120 that is operated by the input user who performs data input in pursuit of the reimbursement processing for him/herself is referred to as the "input user terminal 120a", whereas the client 120 that is operated by the delegate input user who performs the data input on behalf of the input user according to his/her request is referred to as the "delegate input user terminal 120b".

The collaboration server 140 provides a service for allowing the employees of the company possessing the network system 100 to collaborate by exchanging information with each other. More specifically, the collaboration server 140 provides an instant messaging service, an electronic mail service, and others. In the embodiment of the present invention, the agent server 110 can exchange information with the clients 120 using the service provided by the collaboration server 140.

The user management server 150 is responsible for managing information regarding the users of the network system 100, including, e.g., mail addresses and other user IDs and passwords. The user management server 150 provides the information managed by itself over the network to applications as appropriate, through a published API and in an appropriate format. The applications may include an instant messaging client, and e-mail client software.

The workflow server 160 generates a workflow process based on a segmented task structure created from a model structure by the agent server 110, and manages the generated workflow process. The contents and details in generation of the model structure, the segmented task structure, and the workflow process created by the workflow server 160 will be described later.

The application server 170 interacts with other computer devices of the system 100 to provide a business service. It is assumed in the embodiment of the present invention that the application server 170 provides a reimbursement processing service of traveling expenses and the like, which is necessary for the employees to conduct business in the real world.

The network 130 is a communication path connecting the client 120, the agent server 110, and the application server 170, which can be implemented by a LAN (Local Area Network), for example. The network 130, or the LAN, connects computer systems using TCP/IP, which is a communication protocol well known to those skilled in the art.

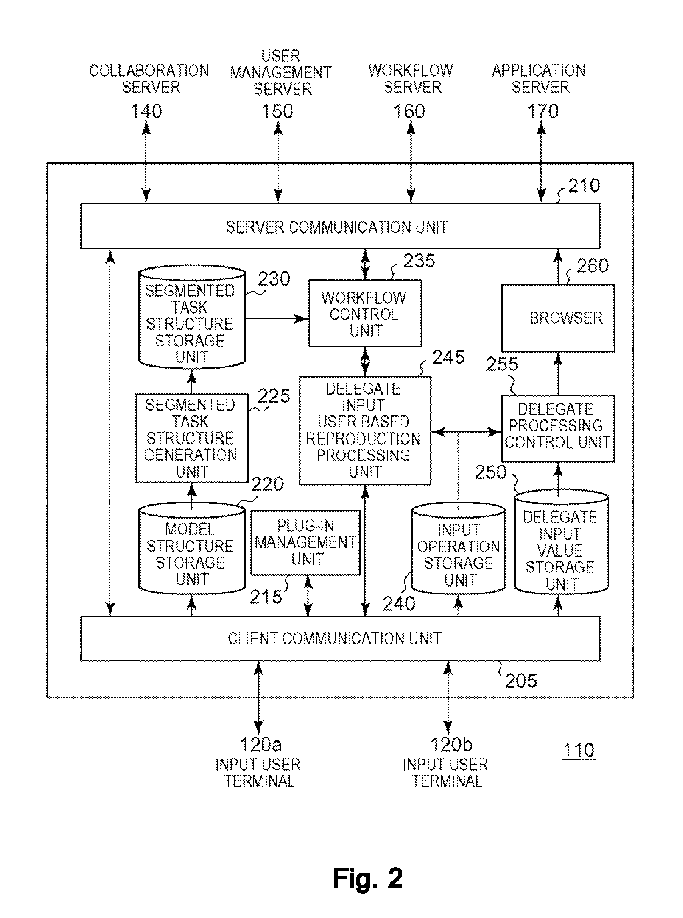

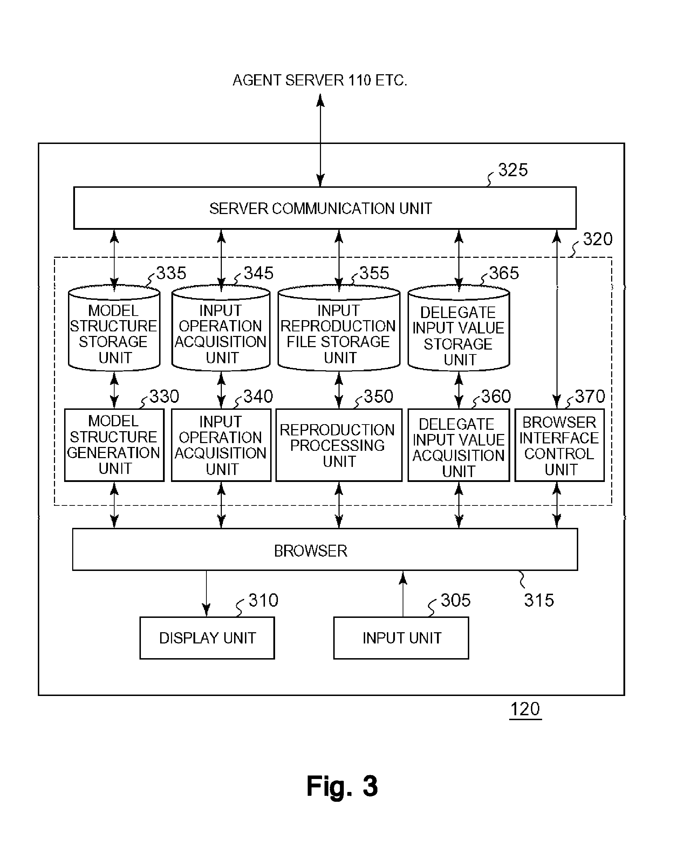

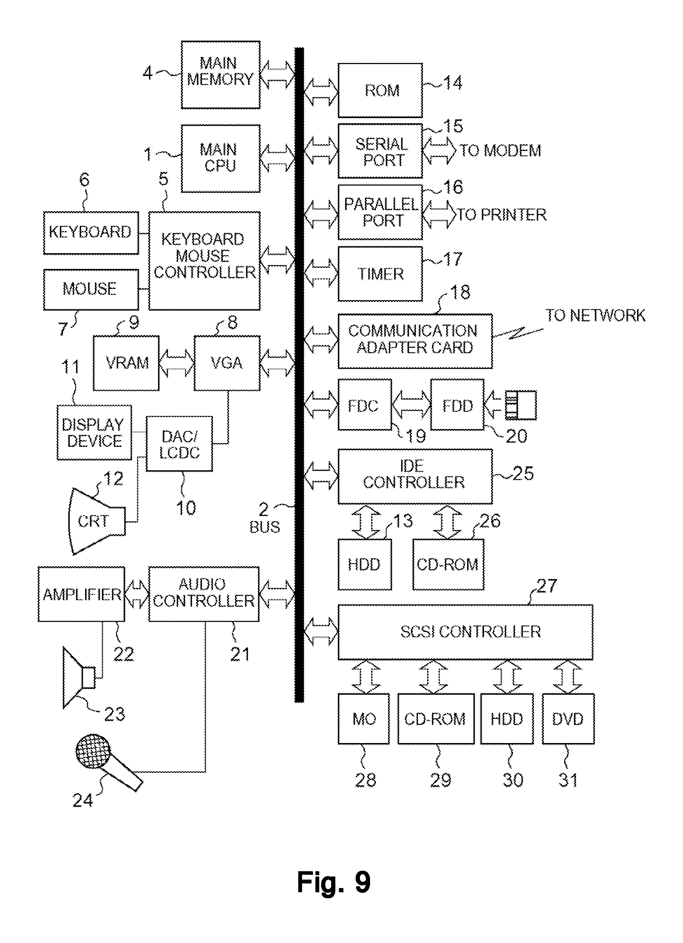

Fig. 2 is a functional block diagram of the agent server 110 according to the embodiment of the present invention. The elements shown in the functional block diagrams of Figs. 2 and 3 can be implemented in an information processing apparatus having a hardware configuration as will be described later in conjunction with Fig. 9, by loading an operating system and a computer program stored in a hard disk drive 13 or the like to a main memory 4 and causing a CPU 1 to read the same, and by causing the hardware resources and the software to cooperate together.

In the embodiment of the present invention, the agent server 110 includes a client communication unit 205, a server communication unit 210, a plug-in management unit 215, a model structure storage unit 220, a segmented task structure generation unit 225, a segmented task structure storage unit 230, a workflow control unit 235, an input operation storage unit 240, a delegate input user-based reproduction processing unit 245, a delegate input value storage unit 250, a delegate processing control unit 255, and a browser 260.

The client communication unit 205 provides a function to enable the agent server 110 to communicate with the client 120, including the input user terminal 120a and the delegate input user terminal 120b. The server communication unit 210 provides a function to enable the agent server 110 to communicate with the server group connected to the network 130, including the collaboration server 140, the user management server 150, the workflow server 160, and the application server 170.

The plug-in management unit 215 stores a plug-in program used together with the browser of the client 120 of the embodiment of the present invention, and, in response to a request from the client 120, provides the plug-in program to the client 120 through the client communication unit 205.

The model structure storage unit 220 stores a model structure received from the input user terminal 120a through the client communication unit 205. The segmented task structure generation unit 225 generates a segmented task structure based on the model structure stored in the model structure storage unit 220. The segmented task structure generated by the segmented task structure generation unit 225 is stored in the segmented task structure storage unit 230. The contents and details in generation of the model structure and the segmented task structure will be described later.

The workflow control unit 235 has a function to generate an instruction to dynamically generate a workflow process including at least one delegate input task corresponding to a delegate input user assigned the input task, based on the segmented task structure stored in the segmented task structure storage unit 230, and to transmit the generated instruction to the workflow server 160 through the server communication unit 210. The workflow server 160, in receipt of the instruction, generates the workflow process and, subsequently, performs activation of the workflow process and management of the progress of the task(s). The contents and details in generation of the workflow process generated by the workflow server 160 will be described later.

The input operation storage unit 240 stores recording of terminal operations of the input user at the input user terminal 120a, received from the input user terminal 120a via the client communication unit 205. The recording of the terminal operations of the input user stored in the input operation storage unit 240 is used for the reproduction processing in the delegate input user terminal 120b and for the delegate processing by the delegate processing control unit 255.

When receiving a request for an input reproduction file from the delegate input user terminal 120b that received a processing request of a delegate input task, the delegate input user-based reproduction processing unit 245 generates and transmits to the delegate input user terminal 120b the input reproduction file for providing a data input interface for the input field assigned to the delegate input user.

The delegate input value storage unit 250 stores a delegate input value that was received through the client communication unit 205 from the delegate input user terminal 120b that performed the delegate input task.

The delegate processing control unit 255 automatically initiates the delegate processing on the condition that all the delegate input tasks have been completed. More specifically, the delegate processing control unit 255 generates a delegate processing file based on the recording of the input operations stored in the input operation storage unit 240 and the delegate input values stored in the delegate input value storage unit 250. The delegate processing control unit 255 is also capable of activating the browser 260 of the agent server 110. The browser 260 of the agent server 110 has installed thereon a plug-in similar to the one installed onto the client 120. The delegate processing control unit 255 of the agent server 110 carries out the reimbursement processing by interacting with the application server 170 according to the delegate processing file in the browser environment installed with the plug-in.

Fig. 3 is a functional block diagram of the client 120 according to the embodiment of the present invention. The client 120 includes an input unit 305, a display unit 310, a browser 315, a plug-in 320, and a server communication unit 325.

The input unit 305 has a function to receive an input from the user of the client 120 using a keyboard 6 and/or a mouse 7. The display unit 310 has a function to display information on a display device 11 and the like in order to provide the information to the user of the client 120. The server communication unit 325 has a function to communicate with the agent server 110 and the other server computers connected to the network 130.

The browser 315 is application software for browsing electronic documents such as web pages. In the embodiment of the present invention, the browser 315 can download and display files in HTML or XML format from a server on the network. The user can transmit data to the server using an input screen displayed on the browser 315. Further, the browser 315 can be enhanced in function by installing a small program called "plug-in".

In the embodiment of the present invention, the browser 315 may be one of the existing web browsers, such as Internet Explorer (trademark) provided by Microsoft Corporation or Firefox (trademark) provided by Mozilla Corporation, as explained above.

The plug-in 320 is a small program for providing the browser 315 with an additional function. In the embodiment of the present invention, the user of the client 120 downloads and installs the plug-in 320 from the agent server 110. The plug-in technology in itself is well known in the technical field of the web browser, and thus, detailed description thereof will not be provided here.

The plug-in 320 of the embodiment of the present invention includes a model structure generation unit 330, a model structure storage unit 335, an input operation acquisition unit 340, an input operation storage unit 345, a reproduction processing unit 350, an input reproduction file storage unit 355, a delegate input value acquisition unit 360, a delegate input value storage unit 365, and a browser interface control unit 370.

The model structure generation unit 330, in response to designation of the delegate input user for the input field included in the input screen, generates a model structure including an input screen ID, an input field ID, and a delegate input user ID. The model structure storage unit 335 stores the model structure generated by the model structure generation unit 330. The model structure recorded in the model structure storage unit 335 is transmitted through the server communication unit 325 to the agent server 110 to be used for generating a segmented task structure.

The input operation acquisition unit 340 acquires all the terminal operations of the user performed to the browser 315 of the client 120, on the condition that recording of the terminal operations of the user has been initiated in the client 120. The input operation storage unit 345 records the user's terminal operations acquired by the input operation acquisition unit 340. In the embodiment of the present invention, the terminal operations of the user recorded in the input operation storage unit 345 are transmitted to the agent server 110, and subsequently used by the agent server 110 for reproduction of the operations performed in the client 120.

In response to the event that a delegate input user receives a processing request of a delegate input task from the agent server 110 and accepts the request, the reproduction processing unit 350 transmits a request for an input reproduction file to the agent server 110 via the server communication unit 325. The input reproduction file storage unit 355 stores the input reproduction file, received by the server communication unit 325 as a reply to the request for the input reproduction file, which provides a data input interface for the input field assigned to the delegate input user. Further, the reproduction processing unit 350 executes the input reproduction file stored in the input reproduction file storage unit 355 on the browser 315.

The delegate input value acquisition unit 360 acquires a delegate input value that the delegate input user inputted into the input field assigned thereto, included in the input screen displayed on the display unit 310. The delegate input value storage unit 365 temporarily stores the delegate input value acquired by the delegate input value acquisition unit 360. The delegate input value stored in the delegate input value storage unit 365 is transmitted to the agent server 110 via the server communication unit 325.

The browser interface control unit 370 controls the interface in the browser 315. Specifically, for example, in response to the event that a delegate input mode is selected in the client 120, the browser interface control unit 370 generates an input screen including the interface for designating a delegate input user from the input screen received from the application server 170, and displays the generated screen on the display unit 310.

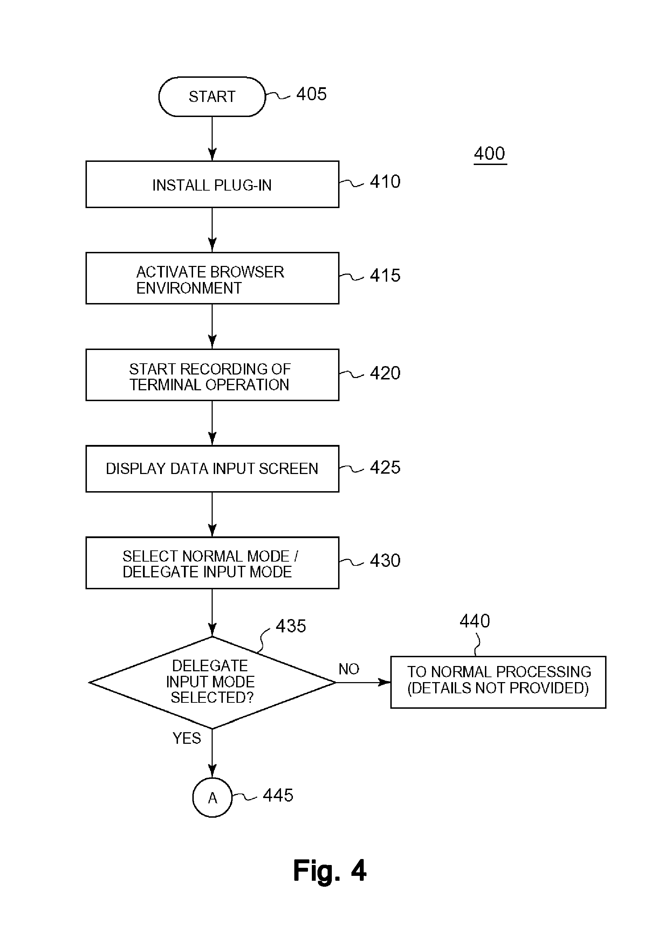

Fig. 4 is a first flowchart 400 illustrating an operation of the input user terminal 120a in the data processing system 100 of the embodiment of the present invention. The process starts at step 405. In step 410, the plug-in program stored in the plug-in management unit 215 of the agent server 110 is downloaded and installed onto the client 120 in response to a request from the client 120, which includes the input user terminal 120a and the delegate input user terminal 120b. Installation of the plug-in is required only once for each client 120, which is not required every time the business processing is conducted in the application server 170.

The process proceeds to step 415, in which the browser environment of the input user terminal 120a is activated as the input user double-clicks on an icon representing the web browser provided on a desktop screen of the display device of the input user terminal 120a, for example.

Next, in step 420, in response to a prescribed operation by the input user, for example in response to the event that the input user depresses an "operation recording start button" added to the browser by the browser interface control unit 370 of the plug-in 320, recording of the input operations on the browser of the input user in the input user terminal 120a is initiated. That is, the input operations made afterwards by the input user on the browser in the input user terminal 120a are all recorded on the input user terminal 120a.

Next, in step 425, the input user operates the input user terminal 120a to request the reimbursement processing of the application server 170, and displays an input screen received as the reply on the display device. In the embodiment of the present invention, the input screen thus provided to the input user includes one or more input fields for inputting data items necessary for conducting the reimbursement processing.

As the process proceeds to step 430, the input user operates the input user terminal 120a to input selection of normal mode/delegate input mode. It is noted that the normal mode is a mode in which the input user performs data input necessary for the reimbursement processing in the application server 170 for all the input items. The delegate input mode is a mode in which the data input necessary for the reimbursement processing in the application server 170 is delegated to another employee for at least one input item.

In step 435, if it is determined that the normal mode has been selected, the process proceeds along the NO arrow to step 440, in which conventionally existing, normal reimbursement processing is carried out based on the interaction between the application server 170 and the input user terminal 120a. Such normal business processing is known to and appropriately done by those skilled in the art, so that detailed description thereof will not be provided here.

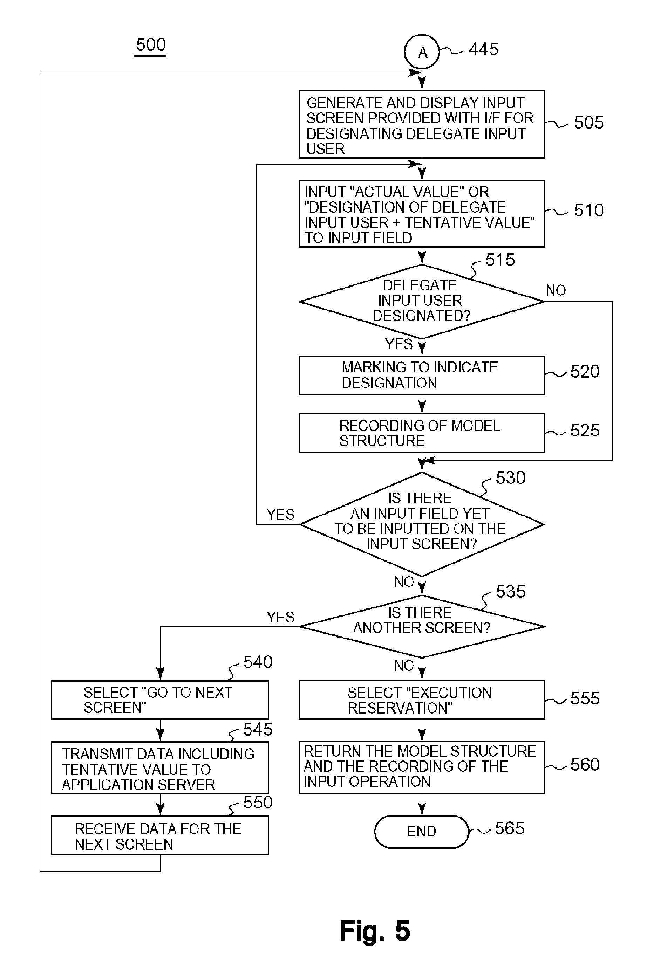

If it is determined in step 435 that the delegate input mode has been selected, the process proceeds along the YES arrow to the symbol (A) corresponding to step 445, and further to step 505 in a flowchart 500 in Fig. 5.

Fig. 5 is a second flowchart 500 illustrating the operation of the input user terminal 120a in the data processing system 100 according to the embodiment of the present invention. In step 505, on the condition that the delegate input mode has been selected, the browser interface control unit 370 of the plug-in 320 in the input user terminal 120a generates an input screen provided with the interface for designating a delegate input user based on the input screen received from the application server 170, and displays the generated input screen on the browser of the display device.

Next, in step 510, the input user operates the input user terminal 120a to input either an "actual value (the value conforming to the specification of the data required for the business processing of the application server 170 in terms of format and believed to be accurate by the input user)" or "designation of delegate input user" onto one of the input fields included in the input screen displayed in step 505. It is noted that, in the case of inputting the "designation of delegate input user", the input user inputs to the input field a "tentative value (the value that may be inaccurate although it conforms to the specification of the data required for the business processing of the application server 170 in terms of format)".

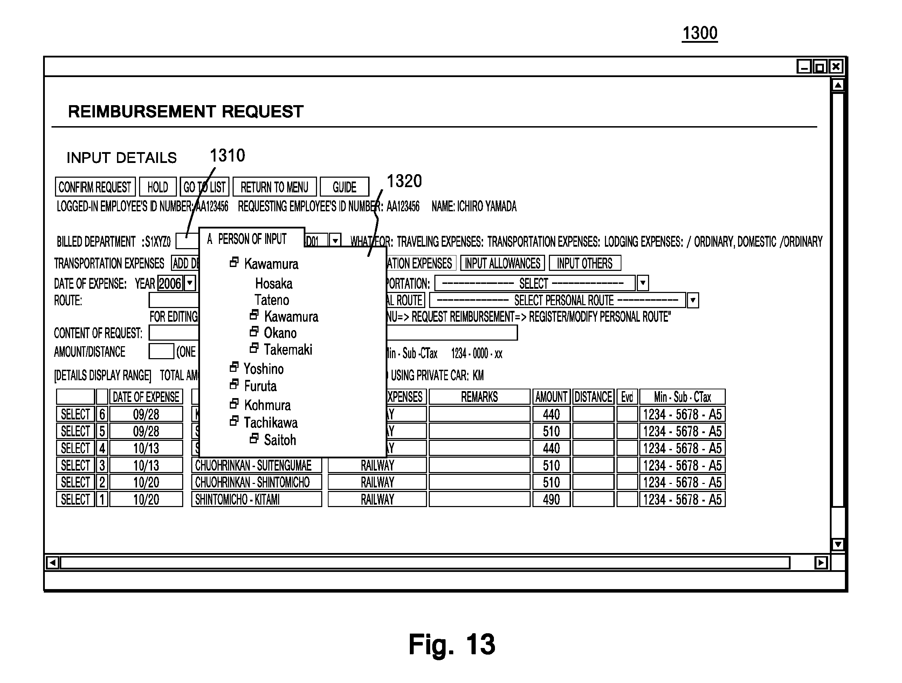

More specifically, in step 510, the browser interface control unit 370 of the input user terminal 120a communicates with the user management server 150 to display a selection list of delegate input users, and receives the input user's selection of the delegate input user from the selection list. Fig. 13 is an example of a window interface including the selection list for designating a delegate input user according to the embodiment of the present invention. In the window 1300 in Fig. 13, a selection list 1320 for selection of a delegate input user is displayed for an input field 1310 to which a billed department code is to be inputted.

The process proceeds to step 515, in which it is determined whether the delegate input user has been designated for the input field in step 510. If it is determined in step 515 that the delegate input user has been designated, the process proceeds along the YES arrow to step 520, in which marking indicating the delegate input user assigned to the input field is carried out.

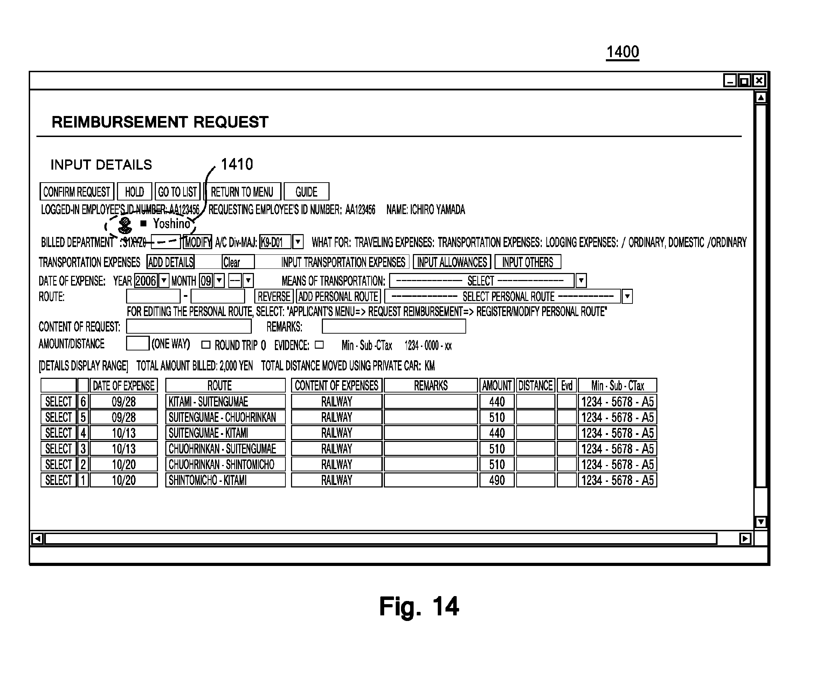

Fig. 14 shows an example of the input screen where the marking of the designated delegate input user has been carried out according to the embodiment of the present invention. In Fig. 14, the marking 1410 is added for the designated input field by the browser interface control unit 370 of the input user terminal 120a.

The process further proceeds to step 525, in which the input user terminal 120a records a model structure 1000, which will be described below in detail, for the delegate input user designated by the input user in step 510, the input field for which the delegate input user is designated, and the input screen including the input field.

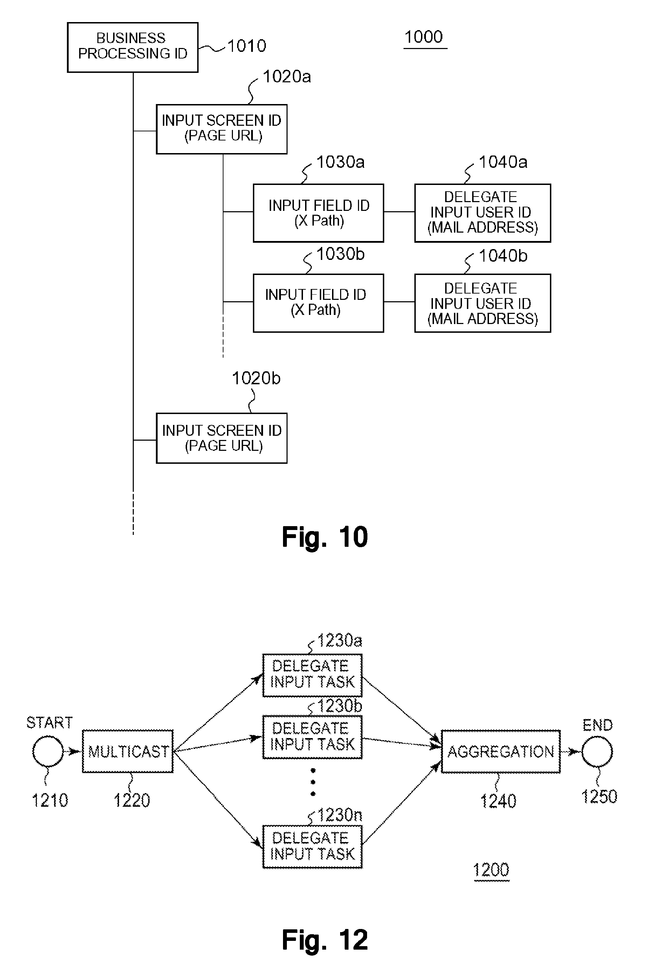

Fig. 10 illustrates a model structure 1000 recorded on the input user terminal in the data processing system according to the embodiment of the present invention. The model structure 1000 has a hierarchical data structure (specifically, tree structure) including a business processing ID 1010, input screen IDs 1020a through 1020n, input field IDs 1030a through 1030n, and delegate input user IDs 1040a through 1040n. Herein, the input screen IDs 1020a through 1020n, the input field IDs 1030a through 1030n, and the delegate input user IDs 1040a through 1040n are collectively referred to as "input screen ID 1020", "input field ID 1030", and "delegate input user ID 1040", respectively.

The tree structure of the model structure 1000 has, as its root, the business processing ID 1010 for specifying the business processing requested by the input user from the application server 170. The business processing IDs are allocated in advance to the respective business processing, and it is assumed in the embodiment of the present invention that the business processing ID allocated to the current reimbursement processing is recorded.

On one hierarchical level beneath that of the business processing ID, the model structure 1000 has at least one input screen ID 1020 for specifying the input screen for inputting data necessary for performing the business processing specified by the business processing ID. In the embodiment of the present invention, only the input screen ID of the input screen including the input field for which the delegate input user has been designated is included in the model structure. In the embodiment of the present invention, the input screen ID 1020 for specifying the input screen is a URL (Uniform Resource Locator) of the corresponding input screen.

On one hierarchical level beneath that of the input screen ID 1020, the model structure 1000 has an input field ID included in the input screen specified by the input screen ID. In the embodiment of the present invention, only the input field ID of the input field for which the delegate input user has been designated is included in the model structure. The input field ID 1030 is an XPath of the corresponding input field.

On one hierarchical level beneath that of the input field ID 1030, the model structure 1000 has a delegate input user ID 1040 for specifying the designated delegate input user. It is assumed in the embodiment of the present invention that the input field ID 1030 and the delegate input user ID 1040 are associated one for one with each other. In the embodiment of the present invention, the delegate input user ID 1040 is a mail address of the corresponding, designated delegate input user.

Returning to the flowchart 500 in Fig. 5, after the model structure is recorded in step 525, the process proceeds to step 530. Also in the case where it is determined in step 515 that a delegate input user has not been designated, i.e., an actual value has been inputted, the process proceeds to step 530 along the NO arrow.

In step 530, it is determined whether there is any input field yet to be inputted in the input screen currently displayed. If it is determined in step 530 that there is an input field yet to be inputted, the process returns to step 510 along the YES arrow, and the steps 510 through 525 are repeated for the input field yet to be inputted until there is no more input field yet to be inputted, during which recording of the model structure is added as appropriate for the input field to which the delegate input user is designated.

If it is determined in step 530 that there is not any input field yet to be inputted, the process proceeds along the NO arrow to step 535, where it is determined whether there still remains a screen for inputting the data necessary for performing the reimbursement processing.

It is noted that the use of a plurality of input screens for input of data required for the reimbursement processing in the above-described manner has a benefit of implementing a more user-friendly interface by allowing the user to input traveling expenses on a first input screen, food and drink expenses on a second input screen, and lodging expenses on a third input screen, for example, and thus, it is a frequently adopted way of designing an application program.

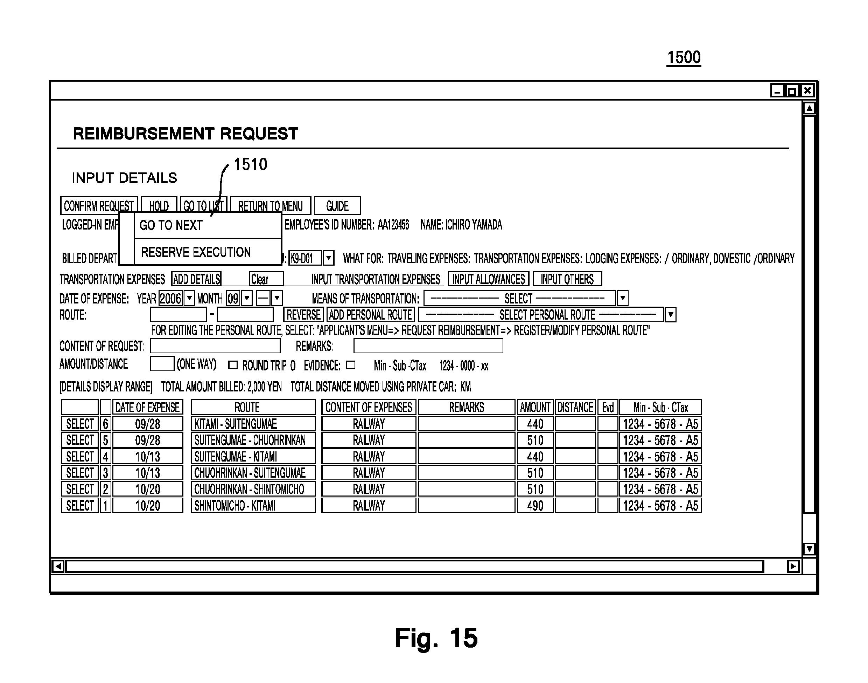

The input user operates the input user terminal 120a to input selection of either "GO TO NEXT SCREEN" or "EXECUTION RESERVATION" in accordance with the determination made in step 535. Fig. 15 shows an example of the interface for inputting the selection of either "GO TO NEXT SCREEN" or "EXECUTION RESERVATION" in the embodiment of the present invention. In the interface shown in Fig. 15, the input user selects "GO TO NEXT SCREEN" or "EXECUTION RESERVATION" from the selection list 1510 displayed by the browser interface control unit 370 of the input user terminal 120a.

If it is determined in step 535 that there still remains an input screen, the process proceeds along the YES arrow to step 540, where "GO TO NEXT SCREEN" is selected. Next, in step 545, in response to selection of "GO TO NEXT SCREEN", the input data including a tentative value inputted in step 510, if any, is transmitted to the application server 170, and data for a next screen is requested.

The process then proceeds to step 550, where the input user terminal 120a receives from the application server 170 the data for the next input screen requested in step 545. Thereafter, the process returns to step 505, and the steps 505 through 550 are repeated for the input screen according to the data received in step 550, until there is no more screen for inputting the data necessary for performing the reimbursement processing.

If it is determined in step 535 that there is no more input screen, the process proceeds along the NO arrow to step 555, where "EXECUTION RESERVATION" is selected. Next, the process proceeds to step 560, where the input user terminal 120a transmits the model structure 1000 including the information for designating a delegate input user to the agent server 110. In step 560, the input user terminal 120a also transmits to the agent server 110 a part of the recording of the terminal operations of the input user of which recording was initiated in the above-described step 420, that concerns the current business processing (i.e., the reimbursement processing). Thereafter, the process proceeds to step 565, where the process is terminated.

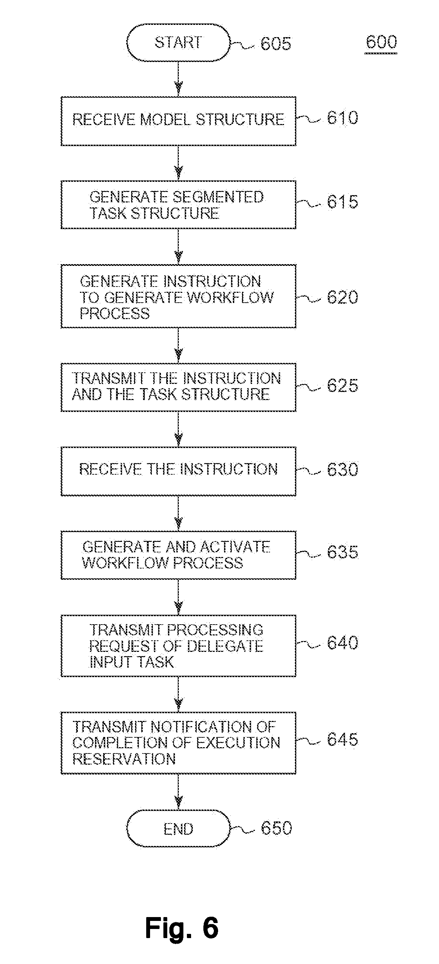

Fig. 6 is a flowchart 600 illustrating an operation for preparation of delegate input task processing, including generation of a workflow process, according to the embodiment of the present invention. The process starts at step 605. In step 610, the agent server 110 receives the model structure 1000 transmitted by the input user terminal 120a in the above-described step 560. Next, in step 615, the agent server 110 interprets the received model structure 1000 to generate a segmented task structure 1100.

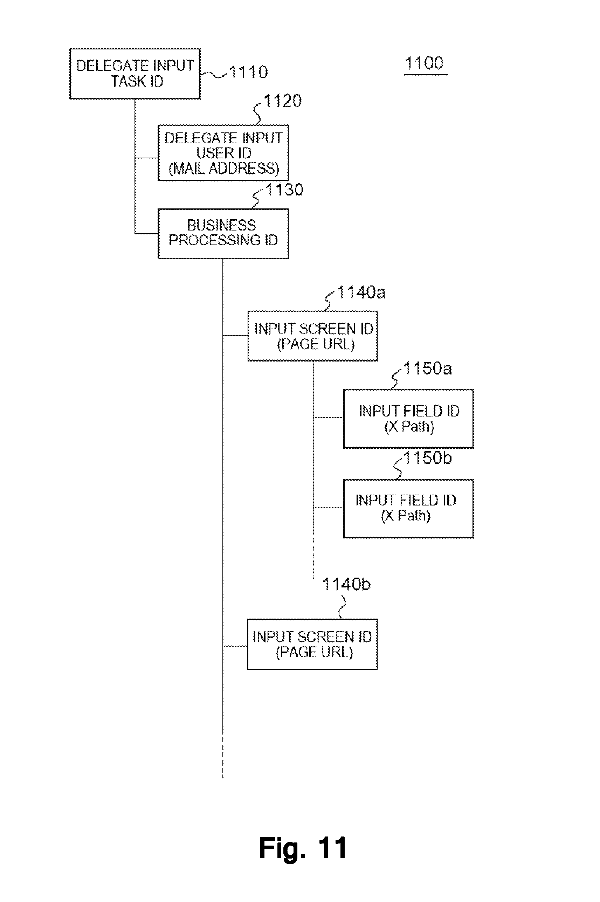

Fig. 11 illustrates a segmented task structure 1100 generated by the agent server 110 in the data processing system according to the embodiment of the present invention. The segmented task structure 1100 has a hierarchical data structure (specifically, tree structure) including a delegate input task ID 1110, a delegate input user ID 1120, a business processing ID 1130, input screen IDs 1140a through 1140n, and input field IDs 1150a through 1150n. Herein, the input screen IDs 1140a through 1140n and the input field IDs 1150a through 1150n are collectively referred to as "input screen ID 1140" and "input field ID 1150", respectively.

The tree structure of the segmented task structure 1100 has, as its root, the delegate input task ID 1110 for specifying the delegate input task assigned to a respective delegate input user. In the embodiment of the present invention, the delegate input task IDs 1110 are generated by the number corresponding to the number of the delegate input user IDs existing in the model structure 1000 received by the agent server 110, and the generated delegate input task IDs 1110 are each recorded as a root of the segmented task structure 1100.

On one hierarchical level beneath that of the delegate input task ID 1110, the segmented task structure 1100 has a delegate input user ID 1120 for specifying the delegate input user who is responsible for performing the task, and a business processing ID 1130 generated from the business processing ID 1010 of the model structure 1000.

The segmented task structure 1100 has an input screen ID 1140 on one hierarchical level beneath that of the business processing ID 1130, and an input field ID 1150 on one hierarchical level beneath that of the input screen ID 1140. The input screen ID 1140 and the input field ID 1150 of the segmented task structure 1100 are generated from the input screen ID 1020 and the input field ID 1030, respectively, of the model structure 1000, and only those related to the delegate input user ID 1120 included in the segmented task structure 1100 are extracted and recorded.

Returning to the flowchart 600 in Fig. 6, in step 620, the agent server 110 generates an instruction to dynamically generate a workflow process 1200 including at least one delegate input task which indicates that a delegate input user delegated to input data to an assigned input field inputs data to the input field.

The process proceeds to step 625, where the agent server 110 transmits the instruction to dynamically generate the workflow process 1200, generated in step 620, and the segmented task structure 1100, generated in step 615, to the workflow server 160.

In step 630, the workflow server 160 receives the instruction to dynamically generate the workflow process 1200 and the segmented task structure 1100, and in response thereto, generates the workflow process 1200 based on the segmented task structure 1100 in step 635.
In the embodiment of the present invention, the generated workflow process 1200 is activated as well in step 635.

Fig. 12 illustrates a workflow process 1200 generated by the workflow server in the data processing system of the embodiment of the present invention. The workflow process 1200 includes a start process step 1210, a multicast process step 1220, one or more delegate input tasks 1230a through 1230n processed in parallel (hereinafter, collectively referred to as "delegate input task 1230"), an aggregation process step 1240, and an end process step 1250.

The in-house network system 100 operates according to the workflow process 1200 in the following manner.
When the workflow process 1200 is activated, the workflow process starts at the start process step 1210. In the multicast process step 1220, for each delegate input task 1230, a processing request of the delegate input task is transmitted to the delegate input user terminal of the assigned delegate input user. Thereafter, the delegate input task is carried out in the delegate input user terminal, and the input data inputted by the delegate input user is transmitted to the agent server 110.

Next, on the condition that every delegate input task 1230 has been completed, or more specifically, on the condition that notification of completion has been received for all the delegate input tasks from the agent server 110 that received the input data, the process proceeds to the aggregation process step 1240. In the aggregation process step 1240, an instruction to start the delegate processing is transmitted to the agent server 110, and then the process proceeds to the end process step 1250, where the workflow process is terminated.

Returning to the flowchart 600 in Fig. 6, in step 640, the agent server 110 uses the collaboration server 140 to transmit a processing request of a delegate input task of inputting data to a corresponding input field, to the delegate input user terminal of the designated delegate input user.

The process further proceeds to step 645, where the agent server 110 transmits notification of completion of execution reservation to the input user terminal 120a to notify the input user of the completion of the execution reservation. Thereafter, the process proceeds to step 650, where the process is terminated.

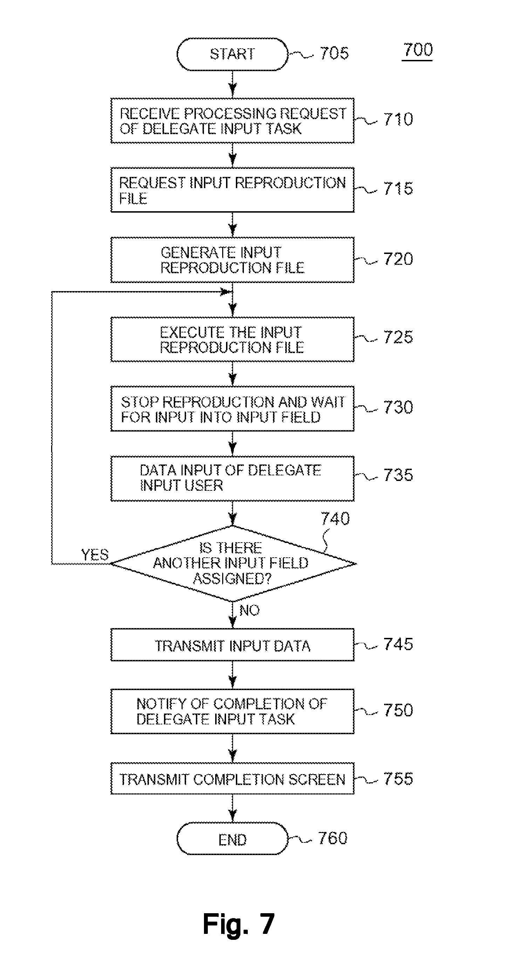

Fig. 7 is a flowchart 700 illustrating an operation of the delegate input task processing in the embodiment of the present invention. The process starts at step 705, and in step 710, the delegate input user terminal 120b receives the processing request of the delegate input task transmitted from the agent server 110 in the above-described step 640.

The delegate input user terminal 120b, in response to reception of the processing request of the delegate input task, starts the processing of the delegate input task 1230 included in the workflow process 1200 and assigned to itself, to receive a data input from the designated delegate input user to the corresponding input field. Specifically, the delegate input user performs the processing of the delegate input task through the following steps.

Firstly, in step 715, an input reproduction file for causing an operation of the input user at the input user terminal 120a to be reproduced at the delegate input user terminal 120b in a pseudo manner is requested from the agent server 110.

Next, in step 720, the delegate input user-based reproduction processing unit 245 of the agent server 110 generates the input reproduction file requested by the delegate input user terminal 120b in step 715, based on the segmented task structure stored in the segmented task structure storage unit 230 and the recording of the input operations stored in the input operation storage unit 240. The generated input reproduction file includes the operation(s) made by the input user at the input user terminal 120a, the input field(s) assigned to the delegate input user who requested the relevant input reproduction file, and information of a stop point of the reproduction processing necessary to allow the delegate input user to input data to the assigned input field(s).

Further, in step 725, the delegate input user terminal 120b uses the above-described input reproduction file to reproduce the operation(s) of the input user at the input user terminal 120a in a pseudo manner. It is assumed in the embodiment of the present invention that the reproduction processing is to carry out interaction with the application server 170 via the agent server 110. It is also assumed in the embodiment of the present invention that the reproduction processing is carried out on the background (i.e., carried out only inside the computer so as to prevent visual recognition of the delegate input user).

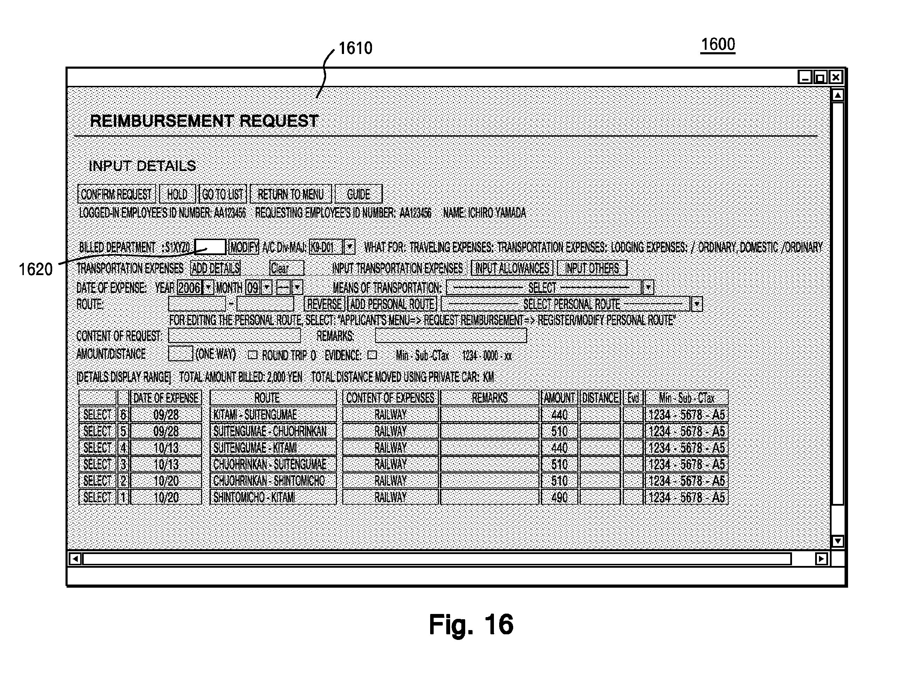

The process proceeds to step 730, where the plug-in, installed in the above-described step 410 onto the web browser of the delegate input user terminal 120b, displays an input screen which accepts input to only the input field(s) to be inputted by the delegate input user, and prompts a data input by the delegate input user to the input field(s). Fig. 16 shows an example of the input screen on which only the input field to be inputted by the delegate input user is made to accept the input according to the embodiment of the present invention. It is noted that, in the input screen 1600 in Fig. 16, a portion 1610 other than the input field 1620 to which the delegate input user is supposed to input data is changed to a dark color and made to prohibit input thereto by the browser interface control unit 370 of the input user terminal 120a.

The process proceeds to step 735, where the delegate input user inputs data to the input field accepting the input, in the input screen displayed in step 730 and on which only the input field(s) to be inputted by the delegate input user is/are made to accept the input.

Next, in step 740, it is determined whether there still remains another input field assigned to the delegate input user. If it is determined in step 740 that there sill remains an input field assigned to the delegate input user, the process returns to step 725 along the YES arrow, and the steps 725 through 735 are repeated for the remaining input field.

If it is determined in step 740 that there is no more input field assigned to the delegate input user, the process proceeds along the NO arrow to step 745. In step 745, the delegate input user terminal 120b transmits the input data inputted by the delegate input user through the loop of the steps 725-735 to the agent server 110.

Next, in step 750, in response to reception of the input data transmitted from the delegate input user terminal 120b in step 745, the agent server 110 transmits notification of completion of the corresponding delegate input task to the workflow server 160. In step 755, the agent server 110 generates a delegate input task completion screen, and transmits the same to the delegate input user terminal 120b. Thereafter, the process proceeds to step 760, where the process is terminated.

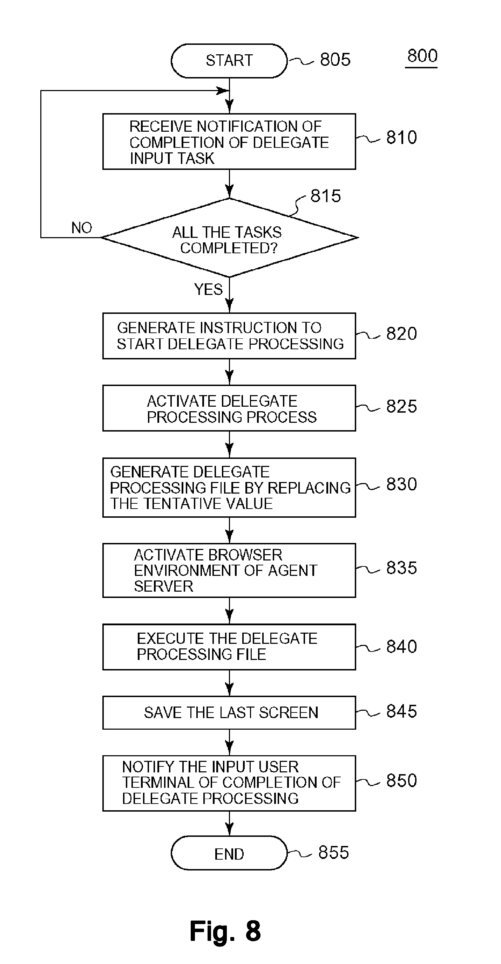

Fig. 8 is a flowchart 800 illustrating an operation of delegate processing in the embodiment of the present invention. The process starts at step 805, and in step 810, the workflow server 160 receives the notification of completion of the delegate input task transmitted from the agent server 110 in the above-described step 750.

The process proceeds to step 815, in which the workflow server 160 determines whether every delegate input task 1230 has been completed. If it is determined NO in step 815, the process returns to step 810. If it is determined in step 815 that all the tasks have been completed (specifically, if notification of completion has been received from the agent server 110 for all the delegate input tasks), the process proceeds to step 820, where the workflow server 160 generates an instruction to start the delegate processing, and transmits the same to the agent server 110.

Next, in response to reception of the instruction to start the delegate processing, the agent server 110 uses the data inputted by the delegate to perform the delegate processing for the business processing in the application server. More specifically, the agent server 110 performs the delegate processing through the following steps.

Firstly, in step 825, in response to reception of the instruction to start the delegate processing, the agent server 110 starts the delegate processing process. Subsequently, in step 830, the agent server 110 replaces the tentative value(s) in the recording of the input operations with the actual value(s) inputted by the delegate, to create a delegate processing file that records procedure for conducting the delegate processing in the browser environment. Thereafter, in step 835, the agent server 110 activates the browser environment for executing the delegate processing file.

In step 840, the agent server 110 executes the delegate processing file in the browser environment activated in step 835, to carry out the delegate processing through the interaction with the application server 170. Subsequently, in step 845, the agent server 110 saves the last screen received from the application server 170 lastly in the delegate processing.

The process then proceeds to step 850, in which the agent server 110 transmits notification of completion of the delegate processing to the input user terminal 120a. The notification of completion of the delegate processing transmitted in step 850 includes a link to the last screen of the delegate processing saved in step 845, to allow the input user to access the last screen to confirm further information about the completion of the business processing. Thereafter, the process proceeds to step 855, where the process is terminated.

Fig. 9 shows an example of a hardware configuration of an information processing apparatus suitable for implementing the client and the servers according to the embodiment of the present invention. The information processing apparatus includes a CPU (Central Processing Unit) 1 and a main memory 4 connected to a bus 2. Further, hard disk drives 13, 30, and removable storages (external storage systems for which recording media can be exchanged) such as CD-ROM drives 26, 29, flexible disk drive 20, MO drive 28, and DVD drive 31, are connected to the bus 2 via a flexible disk controller 19, an IDE controller 25, an SCSI controller 27 and others.

The recording media such as flexible disk, MO, CD-ROM, and DVD-ROM are inserted into the removable storages. These recording media, the hard disk drives 13, 30 and a ROM 14 are capable of recording computer program codes for implementing the present invention by providing instructions to the CPU and others by cooperating with an operating system. The computer program is executed as it is loaded to the maim memory 4. The computer program may be compressed, or divided into a plurality of pieces, to be recorded on a plurality of media.

The information processing apparatus receives an input from input devices such as a keyboard 6 and a mouse 7 via a keyboard/mouse controller 5. The information processing apparatus is connected via a DAC/LCDC 10 to a display device 11 for providing visual data to a user.

The information processing apparatus can connect to a network via a network adapter 18 (Ethernet (R) card or token ring card) to communicate with other computers. The information processing apparatus can also connect to a printer via a parallel port, or to a modem via a serial port.

It will readily be appreciated from the above description that the information processing apparatus suitable for implementing the system according to the embodiment of the present invention can be implemented by an ordinary information processing apparatus such as personal computer, workstation, mainframe and the like, or by a combination thereof. However, these elements are only illustrative, and all the elements are not necessarily indispensable to the present invention.

It is of course readily possible for those skilled in the art to conceive various modifications such as combining a plurality of machines and distributing to the machines the functions of the hardware elements of the information processing apparatus used in the embodiment of the present invention. Such modifications are naturally concepts embodied in the idea of the present invention.

The client and servers according to the embodiment of the present invention may each adopt an operating system supporting the GUI (Graphical User Interface) multi-window environment, such as the Windows (R) operating system available from Microsoft Corporation, the MacOS (R) available from Apple Computer Incorporated, or the UNIX (R) based system provided with the X Window System (for example, AIX (R) available from International Business Machines Corporation).

It can be understood from the foregoing that the system used in the embodiment of the present invention is not restricted to a specific operating system environment. That is, any operating system may be adopted as long as it can provide a resource management function to allow the application software to use the resources of the data processing system. While the resource management function may include hardware resource management function, file handling function, spool function, job management function, memory protective function, virtual memory management function and others, these functions are well known to those skilled in the art, and thus, detailed description thereof will not be provided here.

Further, the present invention can be implemented as hardware, software, or a combination of the hardware and software. A typical example of implementing the present invention by a combination of the hardware and software is implementation with a data processing system having a prescribed program. In this case, as the prescribed program is loaded to and executed by the data processing system, the program controls the data processing system to let it execute the processing according to the present invention. The program is composed of an instruction set that can be expressed by an arbitrary language, code, or notation. The instruction set allows the system to perform a particular function, directly or after either or both of the following: 1) conversion to another language, code, or notation; and 2) reproduction in another medium.

It is needless to say that not only such a program itself but also the medium having the program recorded thereon is within the scope of the present invention. The program for execution of the functions of the present invention can be stored in any computer readable recording medium such as a flexible disk, MO, CD-ROM, DVD, hard disk drive, ROM, MRAM, and RAM. In order for storage to the recording medium, the program may be downloaded from another data processing system connected via a communication line or may be duplicated from another recording medium. Further, the program may be stored in one recording medium or a plurality of recording media by compressing or dividing it into a plurality of pieces. Furthermore, it is of course possible to provide a program product for implementing the present invention in various forms.

It will be apparent for those skilled in the art that various modifications or improvements are possible for the embodiment described above. For example, although the collaboration server, the user management server, and the workflow server are prepared separately from the agent server in the embodiment of the present invention, it is possible to implement the servers with logically divided partitions existing on one and same package hardware. Alternatively, part or all of the functions provided by the servers that are necessary for accomplishing the present invention may be implemented as a software component introduced into the agent server.

In the embodiment of the present invention, the selection list is used for the input user to select a delegate input user by communicating with the user management server. Alternatively, it may be configured such that, on the condition that a delegate input user matching a specific notation method defined in advance for an input field is designated, the plug-in detects and interprets the same to specify the designation of the delegate.

While the normal mode or the delegate input mode is explicitly selected by the input user in the embodiment of the present invention, it may also be configured such that it is determined that the delegate input mode has been selected on the condition that the plug-in detects matching with the above-described specific notation method. In this case, it is preferable that the plug-in redirects the data transmission to the application server and the like to the agent server as required. Further, while the reproduction processing is carried out on the background in the embodiment of the present invention, it may be carried out on the foreground in order to provide the delegate input user with more information necessary for the delegate input operation.

In the embodiment of the present invention, the reproduction processing at the delegate input user terminal is performed through interaction with the application server. Alternatively, it may be configured such that the input user terminal records input screen data in the HTML/XML format and transmits the same to the agent server, and the agent server uses the received input screen data to provide a delegate input user with the interface for processing the delegate input task, without the need to interact with the application server.

While it is configured in the embodiment of the present invention such that the input user inputs a tentative value together with designation of a delegate input user, it may also be configured such that the plug-in automatically allocates the tentative value based on the attribute of the input field and/or the input history in the past.

While the delegate processing file is executed in the browser environment of the agent server in the embodiment of the present invention, it may also be configured such that the agent server remotely controls the input user terminal and others so that the delegate processing is performed in the browser environment of the input user terminal.

It should be noted that the modified or improved embodiments described above are naturally within the technical scope of the present invention.

## Claims

1. A method for supporting input of data necessary for performing business processing in a data processing system including an input user terminal and a delegate input user terminal, the method comprising the steps of:
the input user terminal starting recording of a terminal operation of an input user;
the input user terminal displaying an input screen of data necessary for the business processing, the input screen including one or more input fields and an interface for designating a delegate input user for at least one of the one or more input fields;
the input user terminal receiving from the input user a designation of the delegate input user for at least one of the one or more input fields;
the delegate input user terminal starting reproduction processing of an operation at the input user terminal by using an input reproduction file created based on the recording of the terminal operation of the input user;
the delegate input user terminal stopping the reproduction processing and prompting the delegate input user to input data to be inputted to the input field assigned to the delegate input user;
the delegate input user terminal receiving the input of the data from the delegate input user to the input field for which the delegate input user is designated; and
the delegate input user terminal transmitting the inputted data from the delegate input user.

2. The method according to claim 1, wherein the prompting step includes the step of displaying an input screen on which only the input field to be inputted by the delegate input user is made to accept the input.

3. The method according to claim 1, wherein the input reproduction file includes an operation made by the input user at the input user terminal, information of the input field assigned to the delegate input user, and information of a stop point of the reproduction processing necessary to cause the delegate input user to input to the input field assigned to the delegate input user.

4. The method according to claim 1, wherein the data processing system is connected to an application server via a network, and the business processing is carried out in the application server.

5. The method according to claim 1, wherein
the data processing system is connected to an agent server via a network,
the input user terminal transmits the designation of the delegate input user to the agent server, and
the agent server transmits to the delegate input user terminal a processing request for a delegate input task of inputting data to the corresponding input field.

6. The method according to claim 1, further comprising the step of:
the input user terminal recording a model structure including an input screen ID, an input field ID and a delegate input user ID,
wherein the input reproduction file is created based on the recording of the terminal operation of the input user and the model structure.

7. A program product for supporting input of data necessary for performing business processing, the program causing a client computer to execute the steps of:
starting recording of a terminal operation of an input user;
displaying an input screen of data necessary for the business processing, the input screen including one or more input fields and an interface for designating a delegate input user for at least one of the one or more input fields;
receiving from the input user a designation of the delegate input user for at least one of the one or more input fields;
starting reproduction processing of an operation at another client computer by using an input reproduction file created based on recording of a terminal operation of a user at the other client computer;
stopping the reproduction processing and prompting the delegate input user to input data to be inputted to the input field assigned to the delegate input user;
receiving a data input from the delegate input user to the input field for which the delegate input user is designated; and
transmitting the inputted data from the delegate input user.
